# FASCICULE DE BREVET EUROPEEN

(11) **EP 1 699 018 B1**
(45) Date de publication et mention de la délivrance du brevet: **12.12.2007**
(21) Numéro de dépôt: 06004138.1
(22) Date de dépôt: 01.03.2006
(51) Int. Cl.: G07C 9/00

(54) **Ensemble d'un véhicule et de sa clé de contact, la clé de contact bidirectionnelle et procédé de transmission d'information du véhicule automobile vers sa clé de contact**
Einheit aus einem Fahrzeug und dessen Zündschlüssel, der bidirektionale Zündschlüssel und Verfahren zur Übertragung von Informationen vom Kraftfahrzeug an dessen Zündschlüssel
Vehicle together with its switch key, said bidirectional switch key and method of transmission of information from the automobile vehicle to the switch key

(30) Priorité: 01.03.2005 FR 0502065
(43) Date de publication de la demande: 06.09.2006
(73) Titulaire: JOHNSON CONTROLS AUTOMOTIVE ELECTRONICS, 95526 Cergy Pontoise Cédex (FR)
(72) Inventeur: Pham, Guillaume, 75013 Paris (FR)
(74) Mandataire: Bloch, Gérard

(56) Documents cités:
- DE-A1- 10 259 590
- US-A1- 2004 232 771

## Description

L'invention est née d'un problème de transmission de signaux entre un véhicule automobile et sa clé de contact.

On appellera par la suite clé de contact tout organe permettant l'établissement du contact à bord du véhicule et/ou l'identification de l'usager. Certains constructeurs proposent aujourd'hui comme clé de contact une carte électronique destinée à être introduite dans un lecteur, avant que l'usager n'actionne un bouton de démarrage. On pourrait aussi concevoir que les fonctions de la clé soient assurées par un terminal, par exemple du type téléphone de radiotéléphonie cellulaire.

Une clé de contact permet d'émettre, par liaison radio ou infrarouge, des commandes d'ouverture ou de fermeture des portes vers le calculateur central du véhicule. On peut aussi, pour certains véhicules, émettre des commandes d'ouverture et de fermeture de vitres, d'ouverture du coffre, etc.

Ainsi, la clé comporte un émetteur, de signaux hertziens, et le véhicule, un récepteur. Le véhicule peut aussi émettre des signaux lumineux et/ou sonores quand, sur actionnement de la clé et l'émission par elle de signaux électromagnétiques, le véhicule, en réponse, fait clignoter ses feux de position ou commande son avertisseur sonore pour que l'usager puisse facilement déterminer l'emplacement de son véhicule. L'usager peut alors être considéré comme un récepteur de ces signaux lumineux ou sonores provenant du véhicule. Toutefois, la réception de ces signaux n'est possible que si l'usager est en vue directe de son véhicule ou s'il peut entendre l'avertisseur. Dans certaines circonstances, cela peut être fâcheux.

C'est ainsi que la demanderesse a eu l'idée de prévoir qu'un véhicule et sa clé de contact puissent procéder à des transmissions bidirectionnelles de l'un à l'autre par voie hertzienne.

L'invention concerne donc, et tout d'abord, un ensemble d'un véhicule et de sa clé de contact comportant, chacun, des moyens d'émission et de réception pour échanger entre eux des signaux d'information hertziens radio ou infrarouge.

Ainsi, l'échange entre le véhicule et la clé peut s'effectuer même en présence d'obstacles ou de masques visuels ou sonores.

A titre de produit intermédiaire, la demanderesse entend également revendiquer une clé de contact, pour véhicule automobile, comportant des moyens d'émission de signaux radio ou infrarouge, caractérisée par le fait qu'elle comporte également des moyens de réception de signaux d'information radio ou infrarouge.

Il s'agit donc d'une clé de contact bidirectionnelle.

Jusqu'à maintenant, ces transmissions de la clé vers le véhicule s'effectuent selon un protocole permettant d'économiser la consommation électrique aussi bien de la clé que du véhicule.

Pour toutes ces transmissions, c'est le module radio du véhicule qui effectue un « polling », c'est-à-dire une scrutation radio de la clé. Etant en veille, de façon à économiser la batterie du véhicule, il se met périodiquement et brièvement à l'écoute de la clé et, en cas de silence radio, reste en veille ; en cas de réception de signaux de la clé, il se réveille, se synchronise et se met en réception de la commande.

Pour une commande, les signaux sont émis par la clé selon une trame commençant par un signal de « wake up », c'est-à-dire de réveil et de synchronisation, et se terminant par des signaux de données de commande.

Le signal de réveil et de synchronisation émis par la clé peut être très court (généralement autour d'un centième de milliseconde), car le module radio du véhicule étant alimenté par sa batterie, il peut facilement effectuer la scrutation à une fréquence suffisante pour ne pas le manquer. En même temps, ce dernier se synchronise sur ce même signal.

Si on veut profiter de l'avantage de la clé bidirectionnelle de l'invention et l'utiliser également comme récepteur par exemple d'alarme du véhicule, il faut que la clé effectue aussi une scrutation périodique des signaux éventuellement émis par le véhicule.

Mais cette fois, si le signal de « wake up » émis par le véhicule est très court (par exemple un centième de milliseconde), la clé devrait effectuer un « polling » de fréquence suffisante pour ne pas le manquer et devrait se réveiller souvent, tellement, que la durée de vie de sa batterie pourrait ne pas être suffisante.

Inversement, si le signal de « wake up » émis par le véhicule est beaucoup plus long (par exemple dix secondes), la fréquence de « polling » pourrait permettre de préserver suffisamment la durée de vie de la batterie de la clé, mais, à cause des parasites électromagnétiques, la durée du « wake up » ne permettrait plus la synchronisation de son récepteur.

Un système de l'état de la technique est décrit dans le document DE-A-10259590.

C'est pour résoudre cette contradiction que la demanderesse propose encore un nouveau procédé de transmission de signaux du véhicule vers la clé de l'ensemble de l'invention.

Ainsi, l'invention concerne aussi un procédé de transmission de signaux d'information depuis les moyens d'émission et de réception du véhicule vers sa clé de contact de l'ensemble de l'invention, dans lequel la clé effectue une scrutation et les moyens d'émission et de réception du véhicule émettent des signaux selon des trames de réveil de synchronisation et de données, procédé caractérisé par le fait que les dites trames comportent des signaux de réveil et des signaux de synchronisation radio de la clé de durées différentes.

Dans les trames, on scinde donc le signal de « wake up » en deux signaux successifs, l'un de réveil, qui est relativement long, l'autre de synchronisation qui est beaucoup plus court.

De préférence, étant en veille, la clé scrute périodiquement les trames de signaux émis par les moyens d'émission et de réception du véhicule selon une période de réveil fonction des capacités de la batterie d'alimentation de la clé.

On préserve ainsi la durée de vie de la batterie de la clé.

De préférence encore, la clé étant en veille, les moyens d'émission et de réception du véhicule émettent des signaux de réveil d'une durée fonction de ladite période de réveil de la clé.

Les signaux de réveil peuvent ainsi être détectés rapidement.

Pour éviter le risque d'absence de synchronisation, la clé étant réveillée, les moyens d'émission et de réception du véhicule émettent des signaux de synchronisation après émission des signaux de réveil et avant de transmettre l'information. Ces signaux de synchronisation doivent être d'une durée permettant de synchroniser la transmission, c'est-à-dire beaucoup plus courte.

Simultanément, la clé étant réveillée, elle scrute périodiquement les moyens d'émission et de réception du véhicule selon une période de synchronisation différente de la période de réveil et qui est fonction de la durée des signaux de synchronisation.

La solution permet ainsi de préserver à la fois la sûreté de synchronisation et la durée de vie de la batterie de la clé.

Dans la mise en oeuvre préférée du procédé de l'invention, les signaux d'information sont des signaux d'alarme.

L'invention sera mieux comprise à l'aide de la description suivante du procédé de l'invention, en référence au dessin annexé, sur lequel :
- la figure 1 représente une clé de contact de véhicule et le module radio de ce véhicule y associé et
- la figure 2 est un chronogramme d'ensemble du déroulement de la transmission d'une alarme depuis le véhicule vers la clé selon le procédé de l'invention.

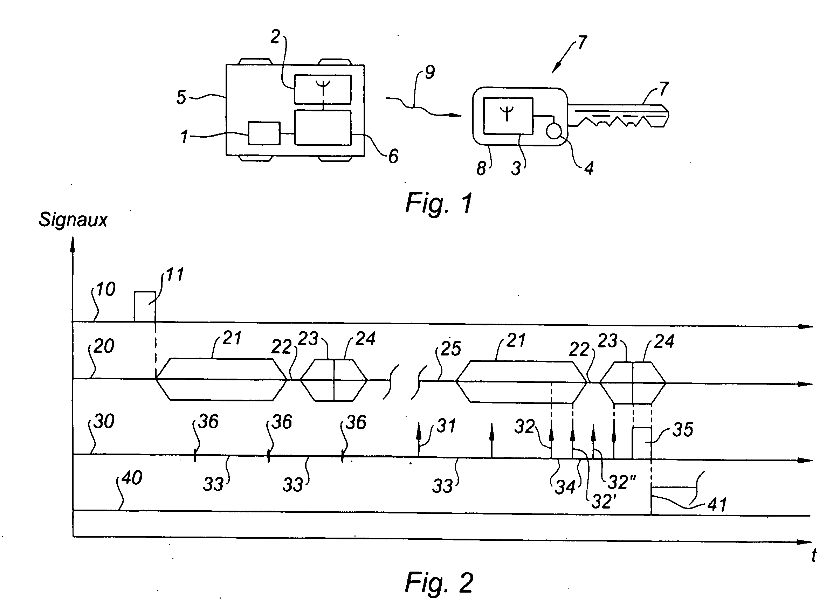

En référence à la figure 1, le véhicule automobile 5 comporte un calculateur central 6 relié à un détecteur 1 de vol, ou d'effraction du véhicule, et à un circuit radio (ou infrarouge) ou émetteur/récepteur 2.

Pour ouvrir ou fermer les portes du véhicule 5, son utilisateur dispose d'une clé 7, ordinairement une clé de contact, comprenant un boîtier 8, lequel contient un circuit récepteur radio 3 relié à un circuit témoin d'alarme 4, par exemple un voyant et/ou un émetteur sonore, ou tout autre afficheur. Le circuit radio 3 peut être un circuit émetteur-récepteur

Sur la figure 2, on a représenté les chronogrammes de la sortie 10 du détecteur 1, des sorties 20 du circuit radio 2 émises sur la liaison radio 9 vers la clé 7, du fonctionnement 30 du circuit récepteur 3 du boîtier 8 de la clé et de la sortie 40 du témoin d'alarme 4, survenant lors d'une effraction du véhicule 5.

Au repos, le circuit récepteur 3 de la clé 7 est en veille, de façon à ne consommer qu'un minimum d'énergie (fournie par une batterie non représentée), mais se réveille périodiquement, selon une première période de scrutation 33, appelée période de réveil, et partiellement en fonctionnement de scrutation, comme indiqués aux instants 36, 31, 32, pour :
- scruter les signaux radio émis par le circuit radio 2 et reçus, selon des amplitudes diverses (figurées par des traits pleins), comme dans les cas 31 et 32, ou non reçues, comme dans les cas 36,
- en cas de réception suffisante d'un de ces signaux (repérés 32), se réveiller, en fait se mettre en fonctionnement,
- en cas d'amplitude insuffisante (31), ignorer la réception et rester en veille.

Les trames de signaux émis par le circuit radio 2 ne sont en effet pas forcément captés par la clé 7, qui peut se trouver hors de portée radio, comme aux instants 36 du chronogramme de la figure 2. Ils peuvent aussi être captés imparfaitement, comme à l'instant 31, auquel cas, il n'y a pas de réveil de la clé 7.

De plus, pour qu'un réveil puisse avoir lieu, comme à l'instant 32, la durée des signaux de réveil 21 doit être plus longue que la période de réveil 33. Pour la présente application, elles sont respectivement de l'ordre de 15 et 14 secondes, ce qui permet d'économiser suffisamment la batterie d'alimentation de la clé et d'en préserver ainsi la durée de vie.

Quand le détecteur 1 détecte ici une effraction du véhicule 5, il envoie un signal 11 au microprocesseur 6 qui peut par exemple valider l'événement, et/ou le mémoriser, avant de transmettre, au circuit radio 2, un ordre de transmission d'alarme vers la clé 7. Le circuit radio 2 émet alors des trames comportant des signaux 21, 23, 24 successifs de réveil, de synchronisation et de données sur la liaison 9, séparées les unes des autres par des intervalles de temps 25, de l'ordre de trente secondes à une minute. Ici, les signaux 21 et 23, dans ces trames, sont séparés d'un intervalle de temps 22, de l'ordre d'une seconde, mais ce n'est pas obligatoire.

Quand la clé 7 capte correctement des signaux de réveil 21, comme à l'instant 32, le circuit 3 de la clé 7 se réveille alors que le circuit radio 2 est encore en cours d'émission de ces signaux 21.

Les signaux de réveil 21 pourraient donc suffire à permettre une synchronisation de la transmission simultanément au réveil de la clé 7, mais leur durée très supérieure à la période de réveil 33 entraîne une impossibilité d'obtenir cette synchronisation.

Pour éviter cela, une fois la clé 7 réveillée, le circuit récepteur 3 continue sa scrutation périodique 32', 32" de la trame 21, 23, 24, mais avec une seconde période de scrutation 34, appelée période de synchronisation 34, beaucoup plus courte que la période de réveil 33.

La période de synchronisation 34 est agencée pour capter à coup sûr les signaux de synchronisation 23 qui suivent les signaux de réveil 21. Comme ces signaux de synchronisation 23 sont d'une durée permettant à la synchronisation de s'opérer, c'est-à-dire, compte tenu des parasites électromagnétiques, de quelques secondes, la période de synchronisation 34 est choisie inférieure à cette durée, de l'ordre d'une seconde.

Et pour éviter que la clé 7 ne tente de se synchroniser, comme à l'instant 32', sur les signaux 21 encore en cours de réception, ce qui donnerait une synchronisation illusoire, les signaux de réveil 21 et les signaux de synchronisation 23 sont émis selon des fréquences porteuses différentes, ce qui permet à la clé de les distinguer et de traiter les signaux convenables.

Par exemple, la fréquence porteuse des signaux de réveil 21 est choisie pour ne pas permettre à l'opération de synchronisation de la transmission d'être entreprise, par exemple par filtrage en entrée du circuit 3, et éliminer la fréquence des signaux de réveil 21 seulement quand le circuit 3 est réveillé.

Une fois le circuit récepteur 3 synchronisé sur l'émetteur du circuit radio 2, la clé 7 récupère, lors d'une opération de transmission 35 suivant immédiatement les signaux de synchronisation 23, l'alarme incluse dans les signaux de données 24 et commande le circuit témoin 4 pour que ce dernier émette l'information 41, ici une alarme.

On notera que l'opération de réveil de la clé n'intervenant qu'en cas d'alarme, c'est-à-dire très rarement, il est admissible, relativement aux impératifs d'économie d'énergie de la batterie de la clé, de déterminer une période de synchronisation très courte, ce qui n'est pas le cas pour la détermination de la période de réveil, puisque la scrutation des signaux de réveil est permanente.

## Revendications

1. Procédé de transmission de signaux d'information depuis des moyens d'émission et de réception (2, 3) d'un véhicule (5) vers sa clé de contact bidirectionnelle (7) comportant des moyens d'émission et de réception de signaux d'information hertziens radio ou infrarouge, dans lequel la clé (7) effectue une scrutation (30) et les moyens d'émission et de réception (2) du véhicule (5) émettent des signaux selon des trames de réveil, de synchronisation et de données, procédé **caractérisé par le fait que** les trames comportent des signaux (21) de réveil et des signaux (23) de synchronisation de la clé (7) de durées différentes.

2. Procédé selon la revendication 1, dans lequel, étant en veille, la clé (7) scrute périodiquement les trames de signaux (21, 23, 24) émis par les moyens d'émission et de réception (2) du véhicule (5) selon une période de réveil (33) fonction des capacités de la batterie d'alimentation de la clé (7).

3. Procédé selon l'une des revendications 1 et 2, dans lequel les moyens d'émission et de réception (2) du véhicule (5) émettent des signaux de réveil (21) d'une durée fonction de ladite période de réveil (33).

4. Procédé selon l'une des revendications 1 à 3, dans lequel les moyens d'émission et de réception (2) du véhicule (5) émettent des signaux de synchronisation (23) après l'émission des signaux de réveil (21).

5. Procédé selon la revendication 2, dans lequel les signaux de synchronisation (23) sont d'une durée permettant de synchroniser la transmission.

6. Procédé selon l'une des revendications 2 à 5, dans lequel, étant réveillée, la clé (7) scrute périodiquement les moyens d'émission et de réception (2) du véhicule (5) selon une période de synchronisation (34) différente de la période de réveil (33).

7. Procédé selon la revendication 4, dans lequel la période de synchronisation (34) est fonction de la durée des signaux de synchronisation (23).

8. Procédé selon l'une des revendications 4 à 7, dans lequel les signaux de réveil (21) et des signaux de synchronisation (23) sont émis selon des fréquences porteuses différentes déterminées pour que la clé (7) les distingue les uns des autres.

9. Procédé selon l'une des revendications 1 à 8, dans lequel les signaux d'information sont des signaux d'alarme.

## Claims

1. Method for transmitting information signals from emitting and receiving means (2, 3) in a vehicle (5) to the bidirectional switch key (7) thereof, comprising means for emitting and receiving radio or infrared Hertzian information signals, wherein the key (7) performs a polling (30) and the emitting and receiving means (2) in the vehicle (5) emit signals according to activating, timing and data frames, said method being **characterized in that** the frames comprise key (7) activating signals (21) and key timing signals (23) of different durations.

2. Method according to claim 1, wherein, while being in standby mode, the key (7) periodically polls the signal frames (21, 23, 24) emitted by the vehicle (5) emitting and receiving means (2) according to an activating period (33) depending on the key (7) power battery capabilities.

3. Method according to any of claims 1 and 2, wherein the vehicle (5) emitting and receiving means (2) emit activating signals (21) of a duration depending on said activating period (33).

4. Method according to any of claims 1 to 3, wherein the vehicle (5) emitting and receiving means (2) emit timing signals (23) after the emission of the activating signals (21).

5. Method according to claim 2, wherein the timing signals (23) last sufficiently to allow for timing of the transmission.

6. Method according to any of claims 2 to 5, wherein, while being activated, the key (7) periodically polls the vehicle (5) emitting and receiving means (2) depending on a timing period (34) being different from the activating period (33).

7. Method according to claim 4, wherein the timing period (34) depends on the timing signal duration (23).

8. Method according to any of claims 4 to 7, wherein the activating signals (21) and the timing signals (23) are emitted depending on different carrier frequencies determined so that the key (7) distinguishes them one from the other.

9. Method according to any of claims 1 to 8, wherein the information signals are alarm signals.

## Patentansprüche

1. Verfahren zum Übertragen von Informationssignalen ausgehend von Sende- und Empfangsmitteln (2, 3) eines Fahrzeugs (5) zu seinem bidirektionalen Zündschlüssel (7), das Sende- und Empfangsmittel für Funk- oder Infrarotinformationssignale aufweist, bei dem der Schlüssel (7) ein Abtasten (30) durchführt und die Sende- und Empfangsmittel (2) des Fahrzeugs (5) Signale gemäß Weck-, Synchronisations- und Datenrahmen senden, **dadurch gekennzeichnet, dass** die Rahmen Wecksignale (21) und Synchronisationssignale (23) des Schlüssels (7) mit unterschiedlichen Dauern aufweisen.

2. Verfahren nach Anspruch 1, bei dem der Schlüssel (7) im Standby-Zustand in regelmäßigen Abständen die Signalrahmen (21, 23, 24), die von den Sende- und Empfangsmitteln (2) des Fahrzeugs (5) gemäß einer Weckperiode (33), die von den Kapazitäten der Versorgungsbatterie des Schlüssels (7) abhängen, gesendet werden, abtastet.

3. Verfahren nach einem der Ansprüche 1 und 2, bei dem die Sende- und Empfangsmittel (2) des Fahrzeugs (5) Wecksignale (21) mit einer Dauer senden, die von der Weckperiode (33) abhängt.

4. Verfahren nach einem der Ansprüche 1 bis 3, bei dem die Sende- und Empfangsmittel (2) des Fahrzeugs (5) Synchronisationssignale (23) nach dem Senden der Wecksignale (21) senden.

5. Verfahren nach Anspruch 2, bei dem die Synchronisationssignale (23) eine Dauer haben, die es erlaubt, das Übertragen zu synchronisieren.

6. Verfahren nach einem der Ansprüche 2 bis 5, bei dem der Schlüssel (7), wenn er geweckt ist, in regelmäßigen Abständen die Sende- und Empfangsmittel (2) des Fahrzeugs (5) gemäß einer Synchronisationsperiode (34) abtastet, die von der Weckperiode (33) unterschiedlich ist.

7. Verfahren nach Anspruch 4, bei dem die Synchronisationsperiode (34) von der Dauer der Synchronisationssignale (23) abhängt.

8. Verfahren nach einem der Ansprüche 4 bis 7, bei dem die Wecksignale (21) und Synchronisationssignale (23) gemäß unterschiedlichen Trägerfrequenzen gesendet werden, die so bestimmt werden, dass der Schlüssel (7) sie voneinander unterscheidet.

9. Verfahren nach einem der Ansprüche 1 bis 8, bei dem die Informationssignale Alarmsignale sind.
